# EUROPÄISCHE PATENTSCHRIFT

(11) **EP 0 681 953 B1**
(45) Veröffentlichungstag und Bekanntmachung des Hinweises auf die Patenterteilung: **15.10.1997**
(21) Anmeldenummer: 95106640.6
(22) Anmeldetag: 03.05.1995
(51) Int. Cl.: B60S 1/52

(54) **Düsenträger einer Scheibenwaschanlage für Fahrzeuge, insbesondere Fahrzeug-Scheinwerfer**
Nozzle carrier for a vehicle screen washing device, in particular for vehicle headlights
Support de buses pour systèmes lave-glace de véhicules automobiles, notamment pour les projecteurs

(30) Priorität: 13.05.1994 DE 4416924
(43) Veröffentlichungstag der Anmeldung: 15.11.1995
(73) Patentinhaber: Hella KG Hueck & Co., 59552 Lippstadt (DE)
(72) Erfinder: Orth, Peter, D-59557 Lippstadt (DE); Thorn, Martin, D-59510 Lippetal (DE); Lind, Thomas, D-57258 Freudenberg (DE)

(56) Entgegenhaltungen:
- EP-A- 0 572 147
- DE-A- 4 143 316

## Beschreibung

Die Erfindung betrifft einen Düsenträger einer Scheibenwaschanlage für Fahrzeuge, insbesondere Fahrzeug-Scheinwerfer, mit einem äußeren Zylinder und einem in dem äußeren Zylinder teleskopartig verschiebbaren inneren Zylinder, welcher mit einem aus dem äußeren Zylinder herausschiebbaren Endabschnitt eine Düse trägt, mit einem ersten und zweiten Kolben, durch welche eine bestimmte Menge an Reinigungsflüssigkeit begrenzbar und zur Düse drückbar ist und mit einem der Düse vorgeschalteten Ventil, welches in herausgeschobener Stellung der Düse öffnet.

Ein solcher Düsenträger einer Scheibenwaschanlage für Fahrzeuge, insbesondere für Fahrzeug-Scheinwerfer ist aus der DE 41 43 316 bekannt. Die Scheibenwaschanlage weist außerhalb des äußeren und inneren Zylinders des Düsenträgers eine Kammer auf, welche zur Speicherung der bestimmten Menge an Reinigungsflüssigkeit dient. Mit Druckluft ist die bestimmte Menge an Reinigungsflüssigkeit aus der Kammer heraus und in den inneren Zylinder des Düsenträgers pressbar. Dabei schiebt sich durch den Druck der Reinigungsflüssigkeit der innere Zylinder aus dem äußeren heraus bis die Düse in ihrer Gebrauchsstellung ist. Das der Düse vorgeschaltete Ventil öffnet erst ab einem bestimmten Druck der Reinigungsflüssigkeit. In dem inneren Zylinder ist nur eine kleine Menge an Reinigungsflüssigkeit speicherbar. Somit muß zum Reinigen der Abschlußscheibe eines Fahrzeug-Scheinwerfer der Reinigungsvorgang mehrmals wiederholt werden. Außerdem ist zusätzlich zu einem Vorratsbehälter für die Reinigungsflüssigkeit die externe Kammer für die bestimmte Menge an Reinigungsflüssigkeit notwendig, da die bestimmte Menge an Reinigungsflüssigkeit mittels Druckluft in den Düsenträger hineingedrückt wird. Ferner sind zusätzlich zu dem der Düse vorgeschalteten Ventil zwei Schieberventile und zwei Rückschlagventile notwendig. Der erste Kolben ist in dem inneren Zylinder und der zweite Kolben in dem äußeren Zylinder verschiebbar. Die beiden Kolben sind durch ein stangenartiges Schleppelement miteinander verbunden. Das stangenartige Schleppelement ist rohrförmig gestaltet und weist somit eine Durchgangsöffnung für die Reinigungsflüssigkeit auf. Nachdem die externe Kammer mit der bestimmten Menge an Reinigungsflüssigkeit gefüllt ist, kann nach dem Öffnen eines Schieberventils Druckluft in die Kammer eintreten und die Reinigungsflüssigkeit durch die Durchgangsöffnung des Schleppelementes bis in den inneren Zylinder hineindrücken. Dabei fährt der innere Zylinder aus dem äußeren heraus. Nachdem die bestimmte Menge an Reinigungsflüssigkeit in den inneren Zylinder hineingedrückt ist, nimmt der innere Zylinder über einen Anschlag den ersten Kolben einen kleinen Weg mit. Der erste Kolben schleppt über das Schleppelement den zweiten Kolben mit, welcher dabei auf seiner der Düse abgewandten Stirnseite ein Schiebervenil öffnet. Nach dem Öffnen des Schieberventils verschließt am ersten Kolben ein Rückschlagventil die Durchgangsöffnung des Schleppelementes und die Druckluft drückt gegen die der Düse abgewandte Stirnseite des zweiten Kolbens. Ab einem bestimmten Druck öffnet das der Düse vorgeschaltete Ventil und der erste und der zweite Kolben drücken durch ihr Verschieben zur Düse hin die Reinigungsflüssigkeit aus der Düse heraus. Nach Beendigung des Spritzvorganges liegt der innere Zylinder an einem Kontakt an, durch welchen das sich zwischen der Druckluftquelle und der Kammer eingesetzte Schieberventil schließt. Danach ist der zweite Kolben nicht mehr mit Druckluft beaufschlagt und ein zwischen dem inneren Zylinder und dem äußeren Zylinder eingesetztes federndes Element schiebt den inneren Zylinder in den äußeren Zylinder hinein und den ersten und zweiten Kolben in ihre Ausgangsstellung. In dieser Zeit fördert eine Pumpe Reinigungsflüssigkeit aus dem Vorratsbehälter in die Kammer und öffnet dabei ein Rückschlagventil der Kammer.

Aus der DE 26 55 531 ist eine Scheibenwaschanlage für Fahrzeuge bekannt, bei welcher in einem zwischen einem Vorratsbehälter für die Reinigungsflüssigkeit und der Düse angeordneten externen Zylinder eine so große Menge an Reinigungsflüssigkeit speicherbar ist, daß die gespeicherte Reinigungsflüssigkeit für den gesamten Reinigungsvorgang ausreicht. Die bestimmte Menge an Reinigungsflüssigkeit wird durch einen Kolben zur Düse hin gedrückt, welcher in dem Zylinder durch den Druck der nachströmenden Reinigungsflüssigkeit verschiebbar ist.

Aufgabe der Erfindung ist es, den im Oberbegriff des Anspruchs 1 beschriebenen Düsenträger einer Scheibenwaschanlage für Fahrzeuge, insbesondere für Fahrzeug-Scheinwerfer derart zu gestalten, daß die bestimmte Menge an Reinigungsflüssigkeit für einen gesamten Waschvorgang ausreichend ist und nicht außerhalb der teleskopartig verschiebbaren Zylinder zwischengespeichert werden muß. Darüber hinaus soll durch den Druck der Reinigungsflüssigkeit sowohl der innere Zylinder aus dem äußeren Zylinder herausschiebbar sein als auch die bestimmte Menge an Reinigungsflüssigkeit aus der Düse herausspritzbar sein. Diese Aufgabe wird nach der Erfindung dadurch gelöst, daß
- der erste Kolben umlaufend dicht an dem äußeren Zylinder anliegt, durch den Druck der Reinigungsflüssigkeit von dem zweiten Kolben wegschiebbar ist und zum Herausschieben des die Düse tragenden inneren Zylinders dient;
- die Kolben bei ihrem größten Abstand zueinander mit dem äußeren Zylinder einen Raum begrenzen, der zur Aufnahme der vorbestimmten Menge an Reinigungsflüssigkeit dient;
- der zweite Kolben durch den Druck der Reinigungsflüssigkeit zum ersten Kolben hin verschiebbar ist und bei seinem Verschieben die bestimmte Menge an Reinigungsflüssigkeit durch eine Durchgangsöffnung des ersten Kolbens zur Düse hin drückt.

Bei einer solchen vorteilhaften Ausgestaltung hängt der Raum, welcher zur Speicherung der bestimmten Menge an Reinigungsflüssigkeit dient, weder von der Länge noch dem Durchmesser des inneren Zylinders ab. Somit muß der innere Zylinder nicht größer als notwendig dimensioniert sein. Der äußere Zylinder, in welchem die bestimmte Menge an Reinigungsflüssigkeit speicherbar ist, ist am Fahrzeug durch die Fahrzeugkarosserie abgedeckt und kann somit so groß wie notwendig gestaltet werden.

Bei einem Düsenträger mit einem fest mit dem zweiten Kolben verbundenen stangenartigen Schleppelement, welches in den inneren Zylinder hineinführbar ist und welches beim Herausschieben der Düse und bei der Anlage an einem mit dem inneren Zylinder verbundenen ersten Anschlag den zweiten Kolben mitschleppt, ist es weiterhin vorteilhaft, wenn das Schleppelement in die Durchgangsöffnung des ersten Kolbens eingreift und zwischen ihr und der Durchgangsöffnung des ersten Kolbens ausreichend Raum für die Zuleitung der Reinigungsflüssigkeit besteht. Hierbei sollte der Weg, welchen der zweite Kolben mitgeschleppt wird, so lang sein, daß der erste und der zweite Kolben zusammen mit dem äußeren Zylinder die bestimmte Menge an Reinigungsflüssigkeit zwischen sich dicht einschließen. Danach drückt die nachströmende Reinigungsflüssigkeit ausschließlich gegen den zweiten Kolben, welcher den ersten Kolben über die dicht eingeschlossene bestimmte Menge an Reinigungsflüssigkeit zur Düse hin schiebt, bis der erste Kolben gegen einen Anschlag des äußeren Zylinders anschlägt. Danach erhöht sich der Druck auf das der Düse vorgeschaltete Ventil und es öffnet sich. Die bestimmte Menge an Reinigungsflüssigkeit wird durch das Ventil hindurch zur Düse hin gedrückt und spritzt aus dieser heraus. Nachdem die bestimmte Menge an Reinigungsflüssigkeit herausgespritzt ist, kann der die Düse tragende innere Zylinder und der erste und zweite Kolben mittels eines in den Düsenträger eingesetzten federnden Elementes in die Ruhestellung geschoben werden.

In diesem Zusammenhang ist es weiterhin vorteilhaft, wenn in der Ruhestellung der Düse zwischen der der Düse abgewandten Stirnseite des ersten Kolbens und dem äußeren Zylinder ein hinterer Innenraumbereich des Düsenträgers besteht, in welchen eine Zuleitung für die Reinigungsflüssigkeit dienende Öffnung des äußeren Zylinders führt, wobei der den Kolben aufnehmende hintere Innenraumbereich zu beiden Stirnseiten des zweiten Kolbens hin miteinander kommuniziert und die Öffnung für die Zuleitung der Reinigungsflüssigkeit in dem äußeren Zylinder zwischen den beiden Kolben angeordnet ist. Dadurch ist zum Verstellen des Düsenträgers kein zusätzliches Ventil notwendig. Der zweite Kolben ist in seiner Ruhelage solange zu beiden Stirnseiten hin von der nachfolgenden Reinigungsflüssigkeit umströmt, bis er von dem ersten Kolben mitgeschleppt wird. Hierbei ist es zweckmäßig, wenn der hintere Innenraumbereich des äußeren Zylinders, welcher in der Ruhestellung der Düse den zweiten Kolben aufnimmt, zumindest im Bereich des zweiten Kolbens in seinem Innendurchmesser größer ist als der erste und zweite Kolben an seinem Außendurchmesser.

Weiterhin ist es vorteilhaft, wenn der zweite Kolben nach dem Herausspritzen einer bestimmten Menge an Reinigungsflüssigkeit an dem ersten Kolben anliegt und die Durchgangsöffnung des ersten Kolbens dicht verschließt. Dadurch kann außer der bestimmten Menge an Reinigungsflüssigkeit keine weitere Reinigungsflüssigkeit aus der Düse austreten.

Vorteilhaft ist es weiterhin, wenn das der Düse vorgeschaltete Ventil von einer ringförmigen Membran, welche auf der Düse zugewandten Stirnseite des ersten Kolbens die Durchgangsöffnung umgibt und umlaufend dicht mit dem ersten Kolben und dem inneren Zylinder verbunden ist, und von zwei aneinanderlegbaren ringförmigen Dichtflächen des ersten Kolbens und des inneren Zylinders im Inneren der Membran gebildet ist. Dadurch kann das der Düse vorgeschaltete Ventil erst öffnen, wenn der erste Kolben an einem Anschlag des äußeren Zylinders anliegt. Somit ist es sicher, daß auch bei Druckschwankungen vorzeitig keine Reinigungsflüssigkeit durch einen Austritt aus der Düse verloren geht. Hierbei ist es weiterhin zweckmäßig, wenn in der Gebrauchsstellung der Düse der innere Zylinder an einem Anschlag des äußeren Zylinders anliegt. Dadurch muß das aus einer Membran bestehende Ventil bei seiner Öffnung nicht auf Zug belastet werden und somit erhöht sich die Lebensdauer der Membran.

Von Vorteil ist es weiterhin, wenn die Dichtfläche des inneren Zylinders von einer Bodenplatte des inneren Zylinders gebildet ist, in welche zentral ein Loch eingebracht ist, dessen der Düse zugewandter Randbereich als ersten Anschlag für das stangenförmige Schleppelement dient, wobei die Dichtfläche der Bodenplatte das zentral liegende Loch umgibt und in die Bodenplatte zwischen der Dichtfläche und seinem äußeren Rand mindestens eine Zuleitungsöffnung für die Reinigungsflüssigkeit eingebracht ist. Eine solche Ausgestaltung ist einfach und kostengünstig herstellbar. In diesem Zusammenhang ist es weiterhin zweckmäßig, wenn die Bodenplatte des inneren Zylinders ein separates Teil ist, zwischen dem und dem Rand des inneren Zylinders die Membran dicht eingesetzt ist, und wenn an die Bodenplatte des inneren Zylinders ein hülsenförmiges Teil angebracht ist, welches in das Innere des inneren Zylinders hineinragt und zum inneren Zylinder hin dicht ausgeführt ist, wobei das stabförmige Schleppelement mit seinem freien Endabschnitt in das hülsenförmige Teil einführbar ist und die Membran zwischen der Dichtfläche des ersten Kolbens und dem inneren Zylinder verläuft. Dadurch kann die bestimmte Menge an Reinigungsflüssigkeit erst dann in das Innere des inneren Zylinders einströmen, wenn das Ventil geöffnet ist. Damit die Funktion des Düsenträgers sichergestellt ist, muß das Innere des hülsenförmigen Teils über das zentral liegende Loch der Bodenplatte mit der Durchgangsöffnung für Reinigungsflüssigkeit hydraulisch verbunden sein.

Zudem ist es vorteilhaft, wenn der erste Kolben und die Membran zusammen aus elastischem Werkstoff hergestellt sind. Die Membran weist eine ausreichend große Elastizität und der Kolben eine hohe Steifigkeit auf, wenn der Kolben aus einem aus elastischem Werkstoff ummantelten Metallring besteht. Eine dichte Verbindung zwischen der Membran und dem Kolben ist sicher.

Außerdem ist es vorteilhaft, wenn in der Ruhestellung der Düse der zweite Kolben an einem Boden des äußeren Zylinders durch eine lösbare und verbindbare Haltevorrichtung gehalten ist. Dadurch kann der zweite Kolben nicht vorzeitig durch den Druck der Reinigungsflüssigkeit verschoben werden, das heißt, erst dann, wenn der zweite Kolben von dem ersten mitgeschleppt wird. Die Haltevorrichtung löst sich dann selbsttätigt.

Ein Ausführungsbeispiel der Erfindung ist in den Zeichnungen dargestellt, und zwar zeigen
- Figur 1: einen mittleren Längsschnitt durch einen Düsenträger einer Scheibenwaschanlage für Fahrzeug-Scheinwerfer mit einer Düse in Ruhelage,
- Figur 2: den Düsenträger in Figur 1, wobei durch den Druck der Reinigungsflüssigkeit ein erster Kolben einen inneren Zylinder, welcher an seinem freien Ende die Düse trägt, aus dem äußeren Zylinder herausgeschoben ist,
- Figur 3: den Düsenträger in Figur 2, wobei am ersten Kolben ein Ventil geöffnet ist,
- Figur 4: den Düsenträger in Figur 3, wobei ein zweiter Kolben durch den Druck der Reinigungsflüssigkeit zum ersten Kolben hin gedrückt ist und
- Figur 5: eine Teilansicht x in Figur 1 in vergrößertem Maßstab.

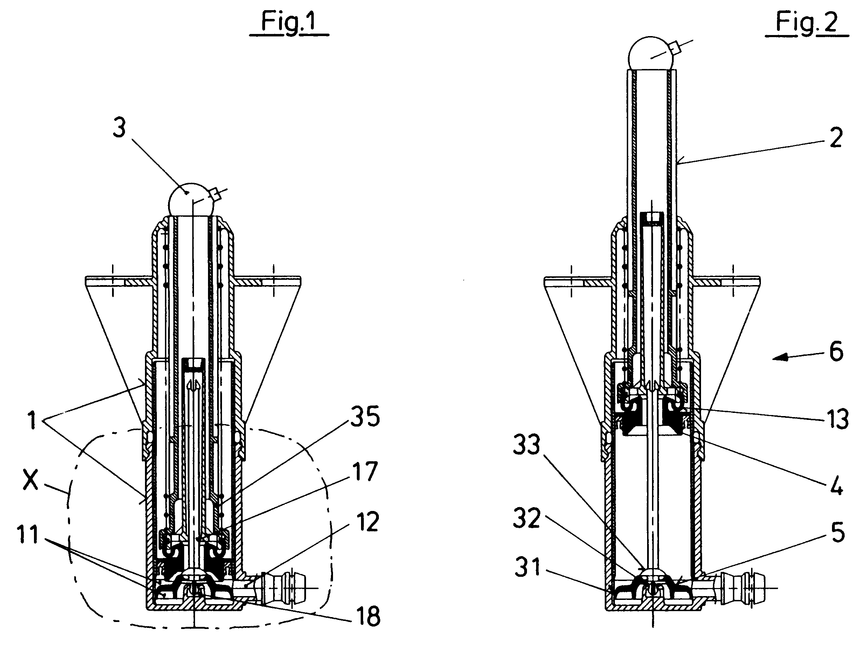

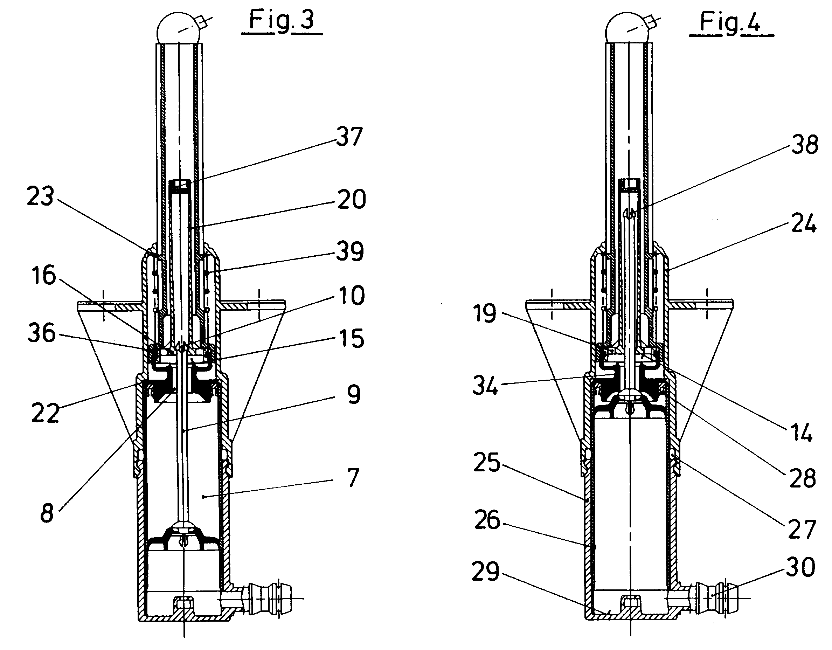

Ein Düsenträger einer Scheibenwaschanlage für Fahrzeug-Scheinwerfer ist hinter einer Öffnung der Fahrzeug-Karosserie einbaubar und weist eine Düse (3) auf, welche von der Ruhestellung (Figur 1) in eine Gebrauchsstellung (Figur 3 und 4) fahrbar ist. In der Gebrauchsstellung der Düse (3) ist eine im Inneren des Düsenträgers speicherbare bestimmte Menge an Reinigungsflüssigkeit auf eine nicht dargestellte Abschlußscheibe eines Fahrzeug-Scheinwerfers spritzbar. Nach dem Spritzvorgang ist die Düse (3) in ihre Ruhestellung zurückfahrbar. Der Düsenträger ist mit einem nicht dargestellten Vorratsbehälter für die Reinigungsflüssigkeit und einer Pumpe verbunden, durch welche die Reinigungsflüssigkeit in das Innere des Düsenträgers drückbar ist und durch den von der Pumpe erzeugten Druck aus der Düse (3) herausspritzbar ist. Dabei wird die Reinigungsflüssigkeit in kleine Tröpfchen zerstäubt, welche mit einer so großen Geschwindigkeit auf die Abschlußscheibe auftreffen, daß diese, ohne Wischerblätter verwenden zu müssen, auch bei einer starken Verschmutzung gereinigt wird.

Der Düsenträger weist einen aus Kunststoff hergestellten äußeren Zylinder (1) und inneren Zylinder (2) auf. Der äußere Zylinder (1) setzt sich zusammen aus den Teilen (24 und 25), welche selbstrastend ineinander gesteckt sind. Die beiden Teile (24, 25) nehmen im Inneren einen Metallzylinder (26) auf, welcher an der Innenseite des äußeren Zylinders (1) anliegt und sich über die Nahtstelle der beiden Teile (24, 25) hinwegerstreckt. Die Nahtstelle zwischen den beiden Teilen (24, 25) ist durch eine Ringdichtung (27) abgedichtet. In dem Metallzylinder (26) ist ein erster Kolben (4) verschiebbar, welcher mit einem ihn umgebenden Teflonring (28) dicht an der Innenseite des Metallzylinders (26) anliegt. Der Metallzylinder (26) ist etwas länger ausgeführt als der Verschiebeweg des ersten Kolbens (4) lang ist. In der Ruhestellung der Düse (3) besteht zwischen dem äußeren Zylinder (1) und einem Boden (29) seines Teils (25) ein hinterer Innenraumbereich (11), in welchen eine in die Seitenwand des Teiles (25) eingebrachte Öffnung (12) führt. Die Öffnung (12) geht nach außen in eine Durchgangsöffnung eines Rohrstutzens (30) über, auf welchen ein nicht dargestellter Schlauch dicht aufsteckbar ist, der als Zuleitung für die Reinigungsflüssigkeit dient. In den hinteren Innenraumbereich (11) ist in der Ruhestellung der Düse (3) ein zweiter Kolben (5) angeordnet. Der zweite Kolben (5) besteht aus elastischem Material und weist umlaufend eine Dichtungslippe (31) auf, welche zum Boden (29) des Teils (25) hin gerichtet ist. Der an den Metallzylinder (26) angegrenzende hintere Innenraumbereich (11) weist einen Durchmesser auf, welcher zumindest abschnittsweise größer ist als der Außendurchmesser des zweiten Kolbens (5). Deshalb und weil der zweite Kolben (5) in der Ruhestellung der Düse (3) mit seiner Dichtungslippe (31) zu dem Boden (29) des Teils (25) beabstandet ist, kommuniziert der hintere Innenraumbereich (11) zu beiden Stirnseiten des zweiten Kolbens (5) hin. In eine zentral liegende Öffnung des zweiten Kolbens (5) greift ein stangenartiges Schleppelement (9) mit einem freien Ende ein, welches auf der dem Boden (29) zugewandten Seite des zweiten Kolbens (5) mittels eines Befestigungsringes an dem zweiten Kolben (5) befestigt ist. Die als Zuleitung für die Reinigungsflüssigkeit dienende Öffnung (12) in dem Teil (25) mündet zwischen dem zweiten Kolben (5) und dem Metallzylinder (26) bzw. dem ersten Kolben (4) in den Innenraumbereich (11) des äußeren Zylinders (1) ein. In der Ruhestellung der Düse (3) ist der zweite Kolben (5) durch eine selbsttätig sich lösende Haltevorrichtung (18) mit dem Boden (29) des Teils (25) verbunden.

Der von dem Teflonring (28) umgebende zweite Kolben (5) ist zusammen mit einer ringförmigen Membran (13), welche eine Durchgangsöffnung (8) des Kolbens (4) umgibt einstückig aus einem elastischen Werkstoff, wie z. B. Gummi hergestellt. In der Ruhestellung der Düse (3) liegt der zweite Kolben (5) mit einem umlaufenden Rand seiner Durchgangsöffnung (8) an einer kugelförmigen Dichtungsfläche (33) des freien Endabschnittes des stangenförmigen Schleppelementes (9) an, welches in der zentral liegenden Öffnung des zweiten Kolbens (5) befestigt ist. Der Mittelpunkt der kugelförmigen Dichtfläche (33) liegt auf der mittleren Längsachse des Düsenträgers. Auf der dem zweiten Kolben (5) abgewandten Stirnseite des ersten Kolbens (4) ist die ringförmige Membran (13) an dem freien Rand eines die Durchgangsöffnung (8) umgebenden Kragens (34) des ersten Kolbens (4) angeformt. Der in dem äußeren Zylinder (1) teleskopartig verschiebbare innere Zylinder (2), welcher die Düse (3) an seinem freien Ende trägt, ist mit einem trichterartig ausgeführten Endabschnitt auf den umlaufenden Randabschnitt der ringförmigen Membran (13) aufgeschoben. Die ringförmige Membran (13) weist an ihrem freien Rand umlaufend eine Verdickung (36) auf, welche einen in den Endabschnitt (35) des inneren Zylinders (2) eingesetzte Bodenplatte (16) hintergreift. Die Bodenplatte (16) ist selbstrastend in den trichterförmigen Endabschnitt (35) des inneren Zylinders (2) eingesetzt und weist ein in den inneren Zylinder (2) hineinragendes hülsenförmiges Teil (20) auf, welches an seinem freien Ende durch einen Stopfen (37) dicht verschlossen ist. In die Bodenplatte (16) ist ein zentral liegendes Loch (17) eingebracht, welches zum Inneren des hülsenförmigen Teils (20) führt. In das Loch (17) greift mit Spiel das stangenartige Schleppelement (9) ein, welches mit Rastnasen (38) den der Düse (3) zugewandten Randbereich des Loches (17) hintergreift und beim Verschieben des zweiten Kolbens (5) in das Innere des hülsenförmigen Teils (20) hineinführbar ist. Um das Loch (17) herum verläuft eine ringförmige Dichtfläche (14) der Bodenplatte (16), an welcher in der Ruhestellung der Düse (3) der Kragen (34) mit seiner als Dichtungsfläche (15) dienenden Stirnseite anliegt. In die Bodenplatte (16) sind zwischen der ringförmigen Dichtungsfläche (14) und dem freien Rand der ringförmigen Membran (13) Zuleitungsöffnungen (19) eingebracht, welche zu dem Raum hinführen, welcher zwischen dem hülsenförmigen Teil (20) und dem inneren Zylinder (2) besteht. Der erste Kolben (4) liegt in der Gebrauchsstellung der Düse (3) an einem zweiten Anschlag (22) des Teils (24) des äußeren Zylinders (1) an. Der zweite Anschlag (22) ist von einer umlaufenden Schulter der Innenseite des Teils (24) gebildet. Zwischen dem zweiten Anschlag (22) und dem der Düse (3) benachbarten freien Ende des äußeren Zylinders (1) weist der äußere Zylinder (1) einen kleineren Innendurchmesser auf als in dem Abschnitt, in welchem der erste Kolben (4) verschiebbar ist. In dem an dem Metallzylinder (26) angrenzenden Abschnitt des äußeren Zylinders (1) ist der innere Zylinder (2) mit seinem trichterförmigen Endabschnitt (35) verschiebbar. Dabei besteht zwischen dem äußeren Rand des trichterförmigen Endabschnitts (35) des inneren Zylinders (2) und der Innenseite des Teils (24) des äußeren Zylinders (1) ein großes Spiel. Zwischen dem äußeren Rand des trichterförmigen Endabschnitts (35) und dem der Düse (3) benachbarten inneren Rand des Teils (24) ist ein federndes Element (39) eingesetzt. Das federnde Element (39) ist eine Schraubenfeder, welche auf den inneren Zylinder (2) aufgeschoben ist und den inneren Zylinder (2) zusammen mit dem ersten und zweiten Kolben (4 und 5) zum Boden (29) des Teils (25) hin drückt.

Beim Eindrücken von Reinigungsflüssigkeit zwischen die beiden Kolben (4 und 5) bleibt zuerst der zweite Kolben (5) in seiner Ruhestellung während der erste Kolben (4) durch den Druck der Reinigungsflüssigkeit gegen die Kraft des federnden Elementes (39) vom zweiten Kolben (5) weggeschoben wird. Der zweite Kolben (5) wird durch den ersten Kolben (4) mitgeschleppt, wenn die Rastnasen (38) des stangenartigen Schleppelementes (9) an dem ersten Anschlag (10) der Bodenplatte (16) anliegen. Der Schleppvorgang endet, wenn der erste Kolben (4) an dem zweiten Anschlag (22) des äußeren Zylinders (1) anschlägt. Beim Beginn des Schleppvorganges des zweiten Kolbens (5) löst dieser sich selbsttätig aus der zwischen ihm und dem Boden (29) bestehenden Haltevorrichtung (18). Nach Beendigung des Schleppvorganges liegt der zweite Kolben (5) mit seiner Dichtungslippe (31) umlaufend dicht an der Innenseite des Metallzylinders (26) an. Bis dahin liegen die beiden Dichtungsflächen (14, 15) des Ventils (6) dicht aneinander. Erst nachdem die dem Boden (29) zugewandte Stirnseite des zweiten Kolbens (5) mit dem Druck der Reinigungsflüssigkeit beaufschlagt wird und der erste Kolben (4) an dem zweiten Anschlag (22) des äußeren Zylinders (1) anschlägt, öffnet sich das Ventil (6). Dabei ermöglicht die aus elastischem Werkstoff hergestellte Membran (13) ein Abheben der Bodenplatte (16) von der Dichtungsfläche (15) des ersten Kolbens (4). Damit die Membran (13) nicht auf Zug beansprucht wird, ist es vorteilhaft, wenn der innere Zylinder (2) an einem dritten Anschlag (23) des äußeren Zylinders (1) anschlägt. Die Düse (3) befindet sich dann in ihrer Gebrauchsstellung. Durch das Öffnen des Ventils (6) kann sich der zweite Kolben (5) weiter zum ersten Kolben (4) hin bewegen. Dabei drückt der zweite Kolben (5) die zwischen ihm und dem ersten Kolben (4) eingeschlossene bestimmte Menge an Reinigungsflüssigkeit durch die Durchgangsöffnung (8) des ersten Kolbens (4), das geöffnete Ventil (6) und durch die Durchgangsöffnung (8) des inneren Zylinders (2) hindurch zur Düse (3) hin. Nach dem Herausspritzen der bestimmten Menge an Reinigungsflüssigkeit, welche für einen gesamten Waschgang der Abschlußscheibe der Reinigungsflüssigkeit ausreicht, liegt der zweite Kolben (5) mit der kugelförmigen Dichtungsfläche (33) dicht an dem ersten Kolben (4) an. Dadurch kann keine weitere Reinigungsflüssigkeit aus der Düse (3) austreten, auch wenn die Pumpe weiterläuft. Nach dem automatischen Abschalten der Pumpe drückt das federnde Element (39) den inneren Zylinder (2) zusammen mit dem ersten und zweiten Kolben (4 und 5) soweit zum Boden (29) des äußeren Zylinders (1) hin, bis die Düse (3) ihre Ruhestellung erreicht. Bei ein und demselben Düsenträger kann das Volumen für die bestimmte Menge an Reinigungsflüssigkeit wunschgemäß durch eine Längenänderung des stangenartigen Schleppelementes in seiner Größe verändert werden.

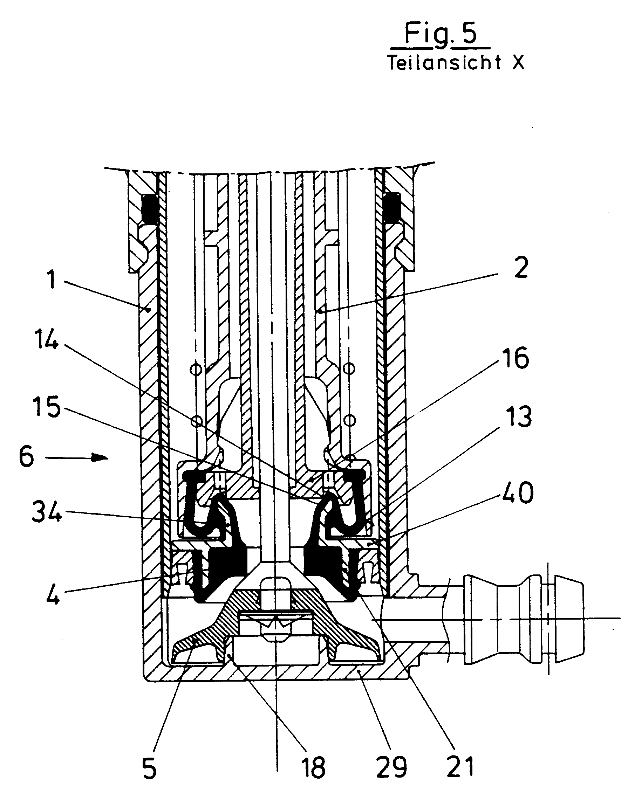

In Figur 5 ist der Aufbau des Ventils (6) und des ersten und zweiten Kolbens (4 und 5) genau dargestellt. Der erste Kolben (4), welcher zusammen mit der ringförmigen Membran (13) aus elastischem Werkstoff hergestellt ist, ist durch einen eingeformten Metallring (21) versteift. Durch den Metallring (21) ist auch der Kragen (34) versteift, welcher mit seiner Dichtungsfläche (15) an der Dichtungsfläche (14) der Bodenplatte (16) anliegt. Die Dichtungsfläche (15) des Kragens (34) ist der Abschnitt einer Kugel, deren Mittelpunkt auf der Längsachse des Düsenträgers liegt, während die Dichtungsfläche (14) eine umlaufende Kante der Bodenplatte (16) ist. Der Metallring (21) weist einen nach außen ragenden Randabschnitt (40) auf, mit welchem der erste Kolben (4) an dem zweiten Anschlag (22) des äußeren Zylinders (1) anschlägt. Der freie Randabschnitt des trichterförmigen Endabschnitts (35) des inneren Zylinders (2) dient als Abstützelement für die Membran (13). Dadurch kann diese auch bei sehr großem Druck der Reinigungsflüssigkeit sich nicht soweit nach außen hin ausdehnen, daß sie an der Innenseite des äußeren Zylinders (1) entlangschleift und somit beschädigt werden kann. Die Haltevorrichtung (18) zwischen dem zweiten Kolben (5) und dem Boden (29) des äußeren Zylinders (1) besteht aus einem hohlen Ansatz des Bodens (29), welcher in eine Vertiefung des zweiten Kolbens (5) eingreift.

## Patentansprüche

1. Düsenträger einer Scheibenwaschanlage für Fahrzeuge, insbesondere Fahrzeug-Scheinwerfer, mit einem äußeren Zylinder (1) und einem in dem äußeren Zylinder (1) teleskopartig verschiebbaren inneren Zylinder (2), welcher mit einem aus dem äußeren Zylinder (1) herausschiebbaren Endabschnitt eine Düse (3) trägt, mit einem ersten und zweiten Kolben (4 und 5), durch welche eine bestimmte Menge an Reinigungsflüssigkeit begrenzbar und zur Düse (3) hin drückbar ist und mit einem der Düse (3) vorgeschalteten Ventil (6), welches in herausgeschobener Stellung der Düse (3) öffnet, dadurch gekennzeichnet, daß
- der erste Kolben (4) umlaufend dicht an dem äußeren Zylinder (1) anliegt, durch den Druck der Reinigungsflüssigkeit von dem zweiten Kolben (5) wegschiebbar ist und zum Herausschieben des die Düse (3) tragenden inneren Zylinders (2) dient;
- die Kolben (4 und 5) bei ihrem größten Abstand zueinander mit dem äußeren Zylinder (2) einen Raum begrenzen, der zur Aufnahme der bestimmten Menge an Reinigungsflüssigkeit dient;
- der zweite Kolben (5) durch den Druck der Reinigungsflüssigkeit zum ersten Kolben (4) hin verschiebbar ist und bei seinem Verschieben die bestimmte Menge an Reinigungsflüssigkeit durch eine Durchgangsöffnung (8) des ersten Kolbens (4) hindurch zur Düse (3) hin drückt.

2. Düsenträger mit einem fest mit dem zweiten Kolben (5) verbundenen stangenartigen Schleppelement (9), welches in den inneren Zylinder (2) hineinführbar ist und welches beim Herausschieben der Düse (3) und bei einer Anlage an einem mit dem inneren Zylinder (2) verbundenen ersten Anschlag (10) den zweiten Kolben (5) mitschleppt, nach Anspruch 1, dadurch gekennzeichnet, daß das Schleppelement (9) in die Durchgangsöffnung (8) des ersten Kolbens (4) eingreift und zwischen ihr und der Durchgangsöffnung (8) des ersten Kolbens (4) ausreichend Raum für die Zuleitung der Reinigungsflüssigkeit besteht.

3. Düsenträger nach Anspruch 2, dadurch gekennzeichnet, daß in der Ruhestellung der Düse (3) zwischen der in der Düse (3) abgewandten Stirnseite des ersten Kolbens (4) und dem äußeren Zylinder (1) ein hinterer Innenraumbereich (11) des Düsenträgers besteht, in welchem eine als Zuleitung für die Reinigungsflüssigkeit dienende Öffnung (12) des äußeren Zylinders (1) führt, wobei der den zweiten Kolben (5) aufnehmende hintere Innenraumbereich (11) zu beiden Stirnseiten des zweiten Kolbens (5) hin miteinander kommuniziert.

4. Düsenträger nach einem der Ansprüche 1 bis 3, dadurch gekennzeichnet, daß der zweite Kolben (5) nach dem Herausspritzen einer bestimmten Menge an Reinigungsflüssigkeit an dem ersten Kolben (4) anliegt und die Durchgangsöffnung (8) des ersten Kolbens (4) dicht verschließt.

5. Düsenträger nach einem der Ansprüche 1 bis 4, dadurch gekennzeichnet, daß das der Düse (3) vorgeschaltete Ventil (6) von einer ringförmigen Membran (13), welche auf der Düse (3) zugewandten Stirnseite des ersten Kolbens (4) die Durchgangsöffnung (8) umgibt und umlaufend dicht mit dem ersten Kolben (4) und dem inneren Zylinder (2) verbunden ist und von zwei aneinanderlegbaren ringförmigen Dichtungsflächen (14, 15) des ersten Kolbens (4) und des inneren Zylinders (2) im Inneren der Membran (13) gebildet ist.

6. Düsenträger nach Anspruch 5, dadurch gekennzeichnet, daß die Dichtungsfläche (14) des inneren Zylinders (2) von einer Bodenplatte (16) des inneren Zylinders (2) gebildet ist, in welche zentral ein Loch (17) eingebracht ist, dessen der Düse (3) zugewandte Randbereich der erste Anschlag (10) für das stangenförmige Schleppelement (9) ist, wobei die Dichtungsfläche (14) der Bodenplatte (16) das zentral liegende Loch (17) umgibt und in die Bodenplatte (16) zwischen der Dichtungsfläche (14) und seinem äußeren Rand mindestens eine Zuleitungsöffnung (19) für die Reinigungsflüssigkeit eingebracht ist.

7. Düsenträger nach Anspruch 6, dadurch gekennzeichnet, daß die Bodenplatte (16) des inneren Zylinders (2) ein separates Teil ist, zwischen dem und dem Rand des inneren Zylinders (2) die Membran (13) dicht eingesetzt ist, und daß an die Bodenplatte (16) des inneren Zylinders (2) ein hülsenförmiges Teil (20) angebracht ist, welches in das Innere des inneren Zylinders (2) hineinragt und zum inneren Zylinder (2) hin dicht ausgeführt ist, wobei das stabförmige Schleppelement (9) mit seinem freien Endabschnitt in das hülsenförmige Teil (20) einführbar ist und die Membran (13) zwischen der Dichtungsfläche (15) des ersten Kolbens (4) und dem inneren Zylinder (2) verläuft.

8. Düsenträger nach einem der Ansprüche 1 bis 7, dadurch gekennzeichnet, daß die aus einem elastischen Werkstoff hergestellte Membran (13) an den ersten Kolben (4) angeformt ist.

9. Düsenträger nach einem der Ansprüche 1 bis 8, dadurch gekennzeichnet, daß in der Ruhestellung der Düse (3) der zweite Kolben (5) an einem Boden (29) des äußeren Zylinders (1) durch eine lösbare und verbindbare Haltevorrichtung (18) gehalten ist.

10. Düsenträger nach einem der vorstehenden Ansprüche, dadurch gekennzeichnet, daß der erste Kolben (4) beim Herausschieben der Düse (3) schon vor dem Öffnen des Ventils (6) an einem zweiten Anschlag (22) des äußeren Zylinders (1) anschlägt und der innere Zylinder (2) erst nach einem selbsttätigen Öffnen des Ventils (6) an einem dritten Anschlag (23) des äußeren Zylinders (1) anliegt.

## Claims

1. Nozzle holder of a screen-washing unit for vehicles, in particular vehicle headlamps, comprising an outer cylinder (1) and an inner cylinder (2), which is telescopically displaceable in the outer cylinder (1) and which carries a nozzle (3) with an end section which can be pushed out of the outer cylinder (1), a first and a second piston (4, and 5) through which a specified volume of a cleaning liquid can be limited and pushed towards the nozzle (3), and with a valve (6), which is positioned in front of the nozzle (3) and which opens up in the extracted position of the nozzle (3), **characterised in that**
- the first piston (4) is seated peripherally tight on the outer cylinder (1), pushed away from the second piston (5) by a pressure of the cleaning liquid and serves to push out the inner cylinder (2) which holds the nozzle (3);
- at the largest distance from each other, the pistons (4 and 5) define with the outer cylinder (2) a space which serves to accommodate a specified volume of cleaning liquid;
- the second piston (5) is displaceable towards the first piston (4) by the pressure of the cleaning liquid, and during its displacement the specified volume of cleaning liquid pushes through a passage (8) of the first piston (4) towards the nozzle (3).

2. Nozzle holder with a rodshaped pulling element (9), which is firmly attached to the second piston (5) and which is insertible into the inner cylinder (2) and which pulls along the second piston (5) when pushing out the nozzle (3) and during abutment with a first stop (10) which is connected to the inner cylinder (2), according to Claim 1, **characterised in that** the pulling element (9) engages the passage (8) of the first piston (4), and that there is sufficient space between the latter and the passage (8) of the first piston (4) for delivery of cleaning liquid.

3. Nozzle holder according to Claim 2, **characterised in that** in an idle position of the nozzle (3) between the end of the first piston (4) facing away in the nozzle (3) and the outer cylinder (1) there is a rear inner space area (11) of the nozzle holder in which an opening (12) of the outer cylinder (1) ducts as a feed for the cleaning liquid, and the rear inner space area (11) which accommodates the second piston (5) communicates with both ends of the second piston (5).

4. Nozzle holder according to one of Claims 1 to 3, **characterised in that** the second piston (5), after ejecting a specified volume of cleaning liquid, abuts the first piston (4) and tightly seals the passage (8) of the first piston (4).

5. Nozzle holder according to one of Claims 1 to 4, **characterised in that** the valve (6), which is placed in front of the nozzle (3), is formed by a ringshaped diaphragm (13), which surrounds the passage (8) at the end of the first piston (4) which is facing towards the nozzle (3) and is peripherally tightly connected to the first piston (4) and the inner cylinder (2), and by two joinable ringshaped sealing surfaces (14, 15) of the first piston (4) of the inner cylinder (2) inside the diaphragm (13).

6. Nozzle holder according to Claim 5, **characterised in that** the sealing surface (14) of the inner cylinder (2) is formed by a base plate (16) of the inner cylinder (2) into which a hole (17) is centrally placed, its edge area facing towards the nozzle (3) being the first stop (10) for the rodshaped pulling element (9), and the sealing surface (14) of the base plate (16) surrounds the centrally located hole (17), and into the base plate (16) between the sealing surface (14) its outer edge is entered at least one feed opening (19) for the cleaning liquid.

7. Nozzle holder according to Claim 6, **characterised in that** the base plate (16) of the inner cylinder (2) is a separate part between which and the edge of the inner cylinder (2) is firmly inserted diaphragm (13), and onto the base plate (16) of the inner cylinder (2) is mounted a sleeveshaped part (20) which intrudes the interior of the inner cylinder (2) and is tight towards the inner cylinder (2), and the rodshaped pulling element (9) is with its free end section insertible into the sleeveshaped part (20), and the diaphragm (13) extends between the sealing surface (15) of the first piston (4) and the inner cylinder (2).

8. Nozzle holder according to one of Claims 1 to 7, **characterised in that** the diaphragm (13), which is made of an elastic material, is formed onto the first piston (4).

9. Nozzle holder according to one of Claims 1 to 8, **characterised in that** in the idle position of the nozzle (3) the second piston (5) is held by a releasable and connectable holding device (18) on a base (29) of the outer cylinder (1).

10. Nozzle holder according to one of the above claims, **characterised in that,** when the nozzle (3) is pushed out, the first piston (4) abuts a second stop (22) of the outer cylinder (1) prior to opening of the valve (6), and the inner cylinder (2) abuts a third stop (23) of the outer cylinder (1) only after automatic opening of the valve.

## Revendications

1. Porte-buse d'une installation de lavage des vitres pour des véhicules, en particulier pour des projecteurs de véhicule, comportant un cylindre extérieur (1) et un cylindre intérieur (2) qui peut coulisser télescopiquement dans le cylindre extérieur (1) et qui, par une portion d'extrémité qui peut coulisser hors du cylindre extérieur (1), porte une buse (3), ainsi qu'un premier et un second pistons (4 et 5) grâce auxquels une quantité déterminée de liquide de nettoyage peut être limitée et envoyée, sous pression, à la buse (3) et qu'un robinet (6) qui est monté en amont de la buse (3) et qui s'ouvre lorsque la buse (3) a coulissé à l'extérieur, caractérisé par le fait
- que le premier piston (4) s'appuie, sur la périphérie et de façon étanche, contre le cylindre extérieur (1), peut coulisser pour s'écarter du second piston (5) sous l'action de la pression du liquide de nettoyage et sert à faire coulisser à l'extérieur le cylindre intérieur (2) qui porte la buse (3);
- que, à leur plus grande distance l'un de l'autre, les pistons (4 et 5) limitent, avec le cylindre extérieur (2), un espace qui sert à recevoir la quantité déterminée de liquide de nettoyage;
- que sous l'action de la pression du liquide de nettoyage, le second piston (5) peut coulisser en direction du premier piston (4) et, lors du coulissement, repousse en direction de la buse (3), par une ouverture de passage (8) à travers le premier piston (4) la quantité déterminée de liquide de nettoyage.

2. Porte-buse comportant un élément de remorquage (9) en forme de tige, qui est solidairement relié au second piston (5), qui peut coulisser à l'intérieur du cylindre intérieur (2), et qui, lors du coulissement de la buse (3) vers l'extérieur et lors d'un appui contre une première butée (10) liée au cylindre intérieur (2), entraîne avec lui en remorque le second piston (5), selon la revendication 1, caractérisé par le fait que l'élément de remorquage (9) pénètre dans l'ouverture de passage (8) du premier piston (4) et qu'entre lui et l'ouverture de passage (8) du premier piston (4) il y a un espace suffisant pour l'arrivée du liquide de nettoyage.

3. Porte-buse selon la revendication 2, caractérisé par le fait que, dans la position de repos de la buse (3), entre la face frontale du premier piston (4) située du côté opposé à la buse (3) et le cylindre extérieur (1), il y a un espace intérieur arrière (11) du porte-buse dans lequel arrive une ouverture (12) du cylindre extérieur qui sert de conduite d'arrivée pour le liquide de nettoyage, l'espace intérieur arrière (11) qui loge le second piston (5) faisant communiquer l'une avec l'autre les deux faces frontales du second piston (5).

4. Porte-buse selon l'une des revendications 1 à 3, caractérisé par le fait qu'après projection, à l'extérieur, d'une quantité déterminée de liquide de nettoyage, le second piston (5) s'appuie contre le premier piston (4) et obture de façon étanche l'ouverture de passage (8) du premier piston (4).

5. Porte-buse selon l'une des revendications 1 à 4, caractérisé par le fait que le robinet (6) monté en amont de la buse (3) est formé d'une membrane de forme annulaire (13) qui entoure l'ouverture de passage (8) sur la face frontale du premier piston (4) située du côté de la buse (3) et qui est reliée, sur la périphérie et de façon étanche, avec le premier piston (4) et le cylindre intérieur (2) et qui est formée de deux surfaces d'étanchéité de forme annulaire (14, 15), pouvant s'appliquer l'une contre l'autre, du premier piston (4) et du cylindre intérieur (2) à l'intérieur de la membrane (13).

6. Porte-buse selon la revendication 5, caractérisé par le fait que la surface d'étanchéité (14) du cylindre intérieur (2) est formée par une plaque de fond (16) du cylindre intérieur (2) au centre de laquelle est prévu un trou (17) dont la zone de bordure située du côté de la buse (3) constitue la première butée (10) pour l'élément de remorquage (9) en forme de tige, la surface d'étanchéité (14) de la plaque de fond (16) entourant le trou (17) situé au centre et au moins une ouverture d'arrivée (19) pour le liquide de nettoyage étant prévue dans la plaque de fond (16), entre la surface d'étanchéité (14) et son bord extérieur.

7. Porte-buse selon la revendication 6, caractérisé par le fait que la plaque de base (7) du cylindre intérieur (2) est une pièce distincte entre laquelle et le bord du cylindre intérieur (2) la membrane (13) est insérée de façon étanche, et que sur la plaque de fond (16) du cylindre intérieur (2) est rapportée une pièce (20) en forme de doigt de gant qui pénètre dans l'intérieur du cylindre intérieur (2) et qui est réalisée de façon étanche par rapport au cylindre intérieur (2), l'élément de remorquage (9) en forme de tige pouvant, par sa portion d'extrémité libre, s'introduire dans la pièce (20) en forme de doigt de gant et la membrane (13) passant entre la surface d'étanchéité (15) du premier piston (4) et le cylindre intérieur (2).

8. Porte-buse selon l'une des revendications 1 à 7, caractérisé par le fait que la membrane (13) fabriquée en un matériau élastique est venue de moulage sur le premier piston (4).

9. Porte-buse selon l'une des revendications 1 à 8, caractérisé par le fait que, dans la position de repos de la buse (3), le second piston (5) est maintenu sur une base (29) du cylindre extérieur (1) par un dispositif de maintien (18) qui peut se déverrouiller et se verrouiller.

10. Porte-buse selon l'une des revendications précédentes, caractérisé par le fait que, lors du coulissement de la buse (3), vers l'extérieur, le premier piston (4) bute, déjà avant l'ouverture du robinet (6), contre une seconde butée (22) du cylindre extérieur (1) et que le cylindre intérieur (2) ne s'appuie contre une troisième butée (23) du cylindre extérieur (1) qu'après une ouverture automatique du robinet (6).
